# EUROPÄISCHE PATENTSCHRIFT

(11) **EP 2 873 899 B1**
(45) Veröffentlichungstag und Bekanntmachung des Hinweises auf die Patenterteilung: **19.12.2018**
(21) Anmeldenummer: 14181884.9
(22) Anmeldetag: 22.08.2014
(51) Int. Cl.: F16L 27/04, F16L 47/18, F16L 27/067

(54) **Kupplungssystem zum Verbinden von zwei Fluidleitungen**
Coupling system for connecting two fluid lines
Système de couplage destiné à relier deux conduites de fluide

(30) Priorität: 14.11.2013 DE 102013223198
(43) Veröffentlichungstag der Anmeldung: 20.05.2015
(73) Patentinhaber: ContiTech MGW GmbH, 34346 Hannoversch-Münden (DE)
(72) Erfinder: Brill, Hartmut, 37242 Bad Sooden-Allendorf (DE)
(74) Vertreter: Finger, Karsten

(56) Entgegenhaltungen:
- EP-A1- 0 672 857
- FR-A3- 2 910 110
- US-A- 1 434 631
- US-A- 2 417 250

## Beschreibung

Die Erfindung betrifft ein Kupplungssystem zum Verbinden einer ersten Fluidleitung mit einer zweiten Fluidleitung, aufweisend einen rohrförmigen Kupplungsstutzen zum Ankoppeln an die erste Fluidleitung, wobei der Kupplungsstutzen außenseitig einen konvexen, kugelringförmigen Kontaktbereich aufweist, und ein rohrförmiges Kupplungsgehäuse zum Ankoppeln an die zweite Fluidleitung, wobei das Kupplungsgehäuse eine Öffnung und eine anschließende Aufnahme aufweist, und wobei die Aufnahme innenseitig konkav, kugelringförmig ausgestaltet ist.

Kupplungssysteme zum Verbinden von Fluidleitungen sind aus dem Stand der Technik bekannt. Unter Fluidleitungen können Leitungen, Rohre oder Schläuche zum Leiten von fluiden, gasförmigen und bzw. oder pastösen Medien wie z.B. Flüssigkeiten oder Gase, verstanden werden. Bei bekannten Kupplungssystemen handelt es sich beispielsweise um so genannte Schraubverbindungen, bei denen die eine Fluidleitung mit einem ersten Adapter verbunden ist, der ein Außengewinde aufweist. Die zweite Fluidleitung ist mit einem zweiten Adapter verbunden, der ein in Axialrichtung formschlüssig gelagertes Überwurfmittel mit einem Innengewinde aufweist. Zum Verbinden werden die beiden Adapter miteinander verschraubt, so dass eine kraftschlüssige Verbindung zwischen den Adaptern und damit auch zwischen den Fluidleitungen entsteht.

Bei dem zuvor genannten Kupplungssystem wurde festgestellt, dass die Adapter einer hohen Querspannung ausgesetzt sind, wenn die Fluidleitungen nicht fluchtend zueinander ausgerichtet sind. Treffen die beiden Fluidleitungen beispielsweise in einem Winkel aufeinander, wobei der Winkel variieren kann, so bedarf es eines Kupplungssystems, das zwei Fluidleitungen unter einem Winkeln miteinander verbinden kann.

Aus der Patentschrift US 1,434,631 ist ein Kupplungssystem bekannt, dass zwei winkelig aufeinander treffende Enden von Fluidleitungen miteinander verbinden kann. Dazu wurden die eingangs genannten Adapter in der Weise angepasst, dass der erste Adapter einen konkaven, kugelringförmigen Aufnahmebereich aufweist. Der zweite Adapter weist nun einen konvexen, kugelringförmigen Stutzen auf, der zur Hälfte in den ersten Adapter einsteckbar ist. Außerdem weist der zweite Adapter zwischen dem kugelringförmigen Stutzen und einem Anschlussende für die Fluidleitung ein ringförmiges Überwurfmittel auf, wobei eine Innenseite des Überwurfmittels konkav kugelringförmig ausgestaltet ist. Wenn nun der Stutzen zur Hälfte in den ersten Adapter eingesteckt ist, überfasst der zweite Adapter die übrige Hälfte des Stutzens mit dem Überwurfmittel, wobei das Überwurfmittel mit einem am Rand angeordneten Innengewinde auf ein Außengewindes des ersten Adapters geschraubt wird. Somit bilden der konkave, kugelringförmige Bereich des ersten Adapters und der konkave, kugelringförmige Bereich des Überwurfmittels jeweils eine Teilaufnahme für den konvexen, kugelringförmigen Stutzen. Erst durch das Verschrauben entsteht ein Kupplungsgehäuse mit einer zum Stutzen korrespondierenden, konkaven, kugelringförmigen Aufnahme, die nunmehr auch die Eignung aufweist, eine Verbindung für die oftmals unter Druck stehenden Fluidleitungen bereitzustellen. Das Kupplungsgehäuse beziehungsweise die Aufnahme und der darin eingebrachte kugelringförmige Stutzen bilden eine formschlüssige Kugellagerung oder ein Kugelgelenk. Dabei korrespondieren die Flächen und bzw. oder die Durchmesser der Aufnahme und des Stutzens zueinander, wobei dies ein Spiel einschließen kann.

Mit dem zuvor vorgestellten Kupplungssystem wird zwar gewährleistet, dass zwei winkelig aufeinander treffende Fluidleitungen spannungsfrei mechanisch miteinander verbunden werden können, jedoch muss ein derartiges Kupplungssystem auch gewährleisten, dass ein verlustfreier Fluidaustausch zwischen den Fluidleitungen möglich ist. Der Fluidaustausch als solches wird dadurch gewährleistet, dass die beiden Adapter rohrförmig ausgestaltet sind. Gemeint ist damit, dass durch den jeweiligen Adapter ein Kanal führt, durch den ein Fluid strömen kann. Um eine Dichtigkeit zwischen den Adapter zu gewährleisten, schlägt die Patentschrift US 1,434,631 vor, den kugelringförmigen Stutzen in zwei Stücke aufzuteilen, wobei die beiden Stücke durch eine zwischen den Stücken angeordnete Feder getrennt sind. Wird der Stutzen nun in den ersten Adapter eingesetzt und das Überwurfmittel auf den ersten Adapter geschraubt, spannt sich die Feder und drückt die beiden Stücke gegen den ersten Adapter beziehungsweise gegen das Überwurfmittel. Damit entsteht eine Dichtung zwischen dem Stutzen und der zweiteiligen Aufnahme.

In der Praxis wurde festgestellt, dass die bekannten Kupplungssysteme eines beträchtlichen Zeit- und Werkzeugaufwands bedürfen, um die Fluidleitungen miteinander zu verbinden. Außerdem wurde festgestellt, dass es mehrerer Dichtungen, und zwar zwischen den verschraubten Adaptern und zwischen dem Stutzen und der Aufnahme, bedarf.

Aus der US 2,417,250 A ist ein Kupplungssystem bekannt, das eine erste Fluidleitung und eine zweite Fluidleitung zeigt. Auf der ersten Fluidleitung ist ein Kupplungsstutzen aufgebracht, der außenseitig einen konvexen, kugelringförmigen Kontaktbereich aufweist. Die zweite Fluidleitung weist eine Aufnahme auf, wobei die Aufnahme innenseitig konkav, kugelringförmig ausgestaltet ist, wobei die kugelringförmige Aufnahme einen fluidseitigen Bereich und einen öffnungsseitigen Bereich aufweist. An dem öffnungsseitigen Bereich weist die Aufnahme Schlitze auf, so dass in diesem Bereich der Aufnahme eine Vielzahl von Fingern entsteht. Zum Aufschieben der Aufnahme auf den Kupplungsstutzen werden die Finger aufgeweitet und zur Befestigung der Aufnahme auf den Kupplungsstutzen werden die Finger durch einen Ring zusammengezogen. Der Ring besteht aus Federstahl.

Aus der FR 29 10 110 A3 ist ebenfalls ein Kupplungssystem mit einer ersten Fluidleitung mit einem Kupplungsstutzen bekannt, wobei sich zwischen den genannten Bauteilen eine umlaufende Rinne befindet. Es ist eine zweite Fluidleitung mit einer Aufnahme vorhanden, die über fingerförmige Schlitze verfügt. Darüber hinaus verfügt die Aufnahme an ihrem Ende, das der Fluidleitung abgewandt ist, über einen Kragen. Im zusammengeführten Zustand hinterfasst die Aufnahme den Kontaktbereich des Kupplungsstutzens. Die genannten Bauteile können aus Metall oder Kunststoff bestehen. Der umlaufende Kragen der Aufnahme greift bei einer Bewegung der Aufnahme auf dem Kupplungsstutzen in die umlaufende Rinne ein und dient als Begrenzungsanschlag für die Bewegung der Aufnahme auf dem Kupplungsstutzen.

Die EP 0 672 857 A1 zeigt ein Gelenkrohr für Kabelkanalrohrzüge. Das Gelenkrohr weist mehrere Rohrteile auf, die jeweils über Gelenke schwenkbar miteinander verbunden sind. Die Rohrteile bestehen aus einem in bestimmten Grenzen elastischem Kunststoff und die Rohrleitung weist eine Gelenkkugel auf. Die Gelenkkugel des Rohrteils und die Gelenkmuffe des Rohrteils verrasten unlösbar miteinander, wobei der Außendurchmesser des Eintrittsquerschnitts der Gelenkmuffe etwas kleiner ist als der Durchmesser der Gelenkkugel. Darüber hinaus weist die Gelenkkugel einen Abschnitt auf, hinter den der Absatz der Gelenkmuffe einschnappt. Die Gelenkkugel weist auf ihrer Oberfläche einen umlaufenden Dichtring auf, der im zusammengebauten Zustand der Rohrleitung zwischen den einzelnen Rohrabschnitten liegt.

Die Aufgabe der Erfindung ist deshalb ein Kupplungssystem bereitzustellen, das möglichst werkzeuglos und bzw. oder schnell zwei Fluidleitungen verbinden kann. Ferner ist es angestrebt, möglichst wenige Dichtflächen vorzusehen, um den Herstellungsaufwand und bzw. oder den Materialaufwand gering zu halten.

Die Aufgabe der Erfindung wird gelöst durch ein Kupplungssystem zum Verbinden einer ersten Fluidleitung mit einer zweiten Fluidleitung gemäß Anspruch 1.

Um nicht nur eine mechanische Verbindung sondern auch eine Fluidverbindung zwischen den beiden Fluidleitungen herzustellen, sind sowohl der Kupplungsstutzen als auch des Kupplungsgehäuse rohrförmig ausgestaltet. Sie weisen also jeweils einen inneren Kanal auf, durch den ein Fluid aus der einen Rohrleitung in die andere Rohrleitung strömen kann. Hierbei ist Fluid weit auszulegen, so beispielsweise als eine Flüssigkeit und bzw. oder als ein Gas und bzw. oder als ein pastöses Medium.

Die Ankopplung des Kupplungsstutzen oder des Kupplungsgehäuses an eine Fluidleitung erfolgt dabei mittels bekannter Verbindungstechniken. Dabei kann die Ankopplung auch durch Integration mit der jeweiligen Rohrleitung erfolgen. So kann beispielsweise der Kupplungsstutzen stoffschlüssig mit der ersten Rohrleitung verbunden sein oder einen integralen Teil davon bilden.

Damit der Kupplungsstutzen in das Kupplungsgehäuse eingesteckt werden kann, weist das Kupplungsgehäuse eine Öffnung auf. Die Aufnahme schließt an die Öffnung an und bildet einen, vorzugsweise integralen, Teil des Kupplungsgehäuses. Die Aufnahme ist aufgrund der rohrförmigen Ausgestaltung des Kupplungsgehäuses ebenfalls rohrförmig und von innen betrachtet konkav und kugelringförmige ausgestaltet. Mit anderen Worten kann die Aufnahme durch eine konkave, kugelringförmige Innenseite charakterisiert sein. Der Kontaktbereich des Kupplungsstutzens ist vorzugsweise korrespondierend zu der Innenseite beziehungsweise zu der Aufnahme ausgestaltet, wobei ein Spiel zwischen der Aufnahme und dem Kontaktbereich vorgesehen sein kann. Dazu ist der Kontaktbereich des Kupplungsstutzens von außen betrachtet konvex und kugelringförmig. Wird der Kupplungsstutzen mit dem Kontaktbereich durch die Öffnung des Kupplungsgehäuses in den Aufnahme eingesteckt, bilden der Kupplungsstutzen und das Kupplungsgehäuse eine kugelförmige Verbindung. Dazu kann ein Verlauf des Durchmessers der Aufnahme zu einem Verlauf des Durchmessers des Kontaktbereichs korrespondieren. Die genannte Verbindung erlaubt ein Verdrehen des Kupplungsstutzens zu dem Kupplungsgehäuses um alle drei Hauptachsen. Somit lassen sich die Fluidleitungen frei von Querspannungen und Verwindungen verbinden. Die beiden Fluidleitungen können sich also frei zueinander verdrehen. Einen formschlüssigen Halt bietet die jeweils kugelringförmige Gestalt des Kontaktbereichs beziehungsweise der korrespondierenden Aufnahme. Die Aufnahme überfasst oder umfasst den Kontaktbereich des eingesteckten Stutzens, so dass der Stutzen in Längsrichtung und in Querrichtung von dem Kupplungsgehäuse gehalten ist. Damit entsteht mit dem Einstecken des Stutzens in das Kupplungsgehäuse eine formschlüssige Verbindung oder Lagerung. Besonders bevorzugt bilden das Kupplungsgehäuse beziehungsweise die Aufnahme und der darin eingebrachte kugelringförmige Stutzen eine formschlüssige Kugellagerung oder ein Kugelgelenk.

Erfindungsgemäß ist es vorgesehen, dass die kugelringförmige Aufnahme einen fluidleitungsseitigen Bereich und in einen öffnungsseitigen Bereich aufweist. Mit dem fluidleitungsseitigen Bereich der Aufnahme ist in Längsrichtung betrachtet der Bereich der Aufnahme gemeint, der zu der ankoppelbaren Fluidleitung ausgerichtet ist. Mit dem öffnungsseitigen Bereich der Aufnahme ist in Längsrichtung betrachtet der Bereich der Aufnahme gemeint, der zu der Öffnung ausgerichtet ist. Die beiden Bereiche der Aufnahme können einen integralen Teil der Aufnahme bilden oder aus miteinander verbundene Teile bestehen. Die entsprechende Verbindung kann kraft- und bzw. oder stoffschlüssig ausgestaltet sein und ist vor dem Einstecken des Kupplungsstutzens in das Kupplungsgehäuse hergestellt. Der fluidleitungsseitige Bereich und der öffnungsseitigen Bereich treffen dabei vorzugsweise in einer Ebene eines größten Innendurchmessers der Aufnahme aufeinander. Der öffnungsseitige Bereich kann sich aber auch weiter in Richtung der Fluidleitung erstrecken.

Außerdem ist es erfindungsgemäß vorgesehen, dass der öffnungsseitige Bereich der Aufnahme in Radialrichtung elastisch verformbar ausgestaltet ist. Eine Längsrichtung der Aufnahme stimmt mit einer Längsrichtung des Kupplungsgehäuses überein. Somit kann hier auch von einer Radialrichtung der Aufnahme gesprochen werden, nämlich die Richtung, die sich quer zu der Längsrichtung erstreckt. Durch die elastische Verformbarkeit des öffnungsseitigen Bereichs kann sich der Innendurchmesser die Aufnahme in diesem Bereich durch Krafteinwirkung vergrößern und nach Wegfall der Krafteinwirkung wieder verkleinern, insbesondere bis auf den ursprünglichen Innendurchmesser. Bevorzugt ist es vorgesehen, dass sich der öffnungsseitige Bereich zumindest bis auf einen Innendurchmesser elastisch verformen beziehungsweise vergrößern lässt, der einem maximalen Außendurchmesser des Kupplungsstutzens im Kontaktbereich entspricht. Aufgrund der konvexen, kugelringförmigen Gestalt kann der Kontaktbereich des Kupplungsstutzens dazu dienen, den öffnungsseitigen Bereich der Aufnahme radial elastisch zu erweitern. Mit einem Einstecken des Kontaktbereichs des Kupplungsstutzens in die Aufnahme vergrößert sich also zunächst der öffnungsseitige Bereich, und zwar bis auf den maximalen Außendurchmesser des Kupplungsstutzens im Kontaktbereich, und verringert sich danach wieder nach einem Passieren des maximalen Außendurchmessers des Kupplungsstutzens im Kontaktbereich. Mit fortschreitendem Einstecken des Kupplungsstutzen hinterfasst der sich in seine ursprüngliche Form bewegende öffnungsseitige Bereich der Aufnahme den Kontaktbereich des Kupplungsstutzens. Schließlich stößt der Kontaktbereich des Kupplungsstutzens auf den fluidleitungsseitigen Bereich der Aufnahme. Damit ist der Kontaktbereich des Kupplungsstutzens einerseits von dem fluidleitungsseitigen Bereich und andererseits von dem öffnungsseitigen Bereich der Aufnahme eingefasst oder umfasst. Ein Formschluss ist somit gewährleistet.

Die vorangegangene Erläuterung der Erfindung zeigt auf, dass der Kupplungsstutzen ohne ein Werkzeug in das Kupplungsgehäuse eingesteckt werden kann. Der öffnungsseitige Bereich der Aufnahme gibt zunächst nach, bis der Kontaktbereich in die Aufnahme eingesteckt ist. Ist dies erfolgt, hinterfasst der öffnungsseitige Bereich den Kontaktbereich, da der öffnungsseitige Bereich aufgrund seiner Elastizität dazu neigt, seine ursprüngliche Form anzunehmen. Aufgrund der Verzichtbarkeit eines Werkzeugs kann eine Verbindung zwischen zwei Fluidleitungen mittels des erfindungsgemäßen Kupplungssystems besonders einfach und schnell hergestellt werden.

Eine bevorzugte Ausgestaltung der Erfindung zeichnet sich dadurch aus, dass das Kupplungsgehäuse und bzw. oder die Aufnahme einstückig ist bzw. sind. Besonders bevorzugt ist die Aufnahme ein integraler Bestandteil des Kupplungsgehäuses. Bei einer Verbindung von Fluidleitungen, die zumeist unter einem bestimmten Druck stehen, werden oftmals hohe Anforderungen an eine Dichtigkeit eines Kupplungssystems zum Verbinden von Fluidleitungen gestellt. Zwischen einzelnen Teilen des Kupplungssystems können dazu Dichtungen vorgesehen sein. Mit einer einstückigen Ausgestaltung der Aufnahme oder des Kupplungsgehäuses wird somit die Anzahl der Dichtungen verringert oder sogar minimiert. Außerdem bietet die einstückige Ausgestaltung der Aufnahme oder des Kupplungsgehäuses den Vorteil, dass die kugelringförmige Form der Aufnahme besonders genau herstellbar ist. Des Weiteren ist ein Einwirken von Querkräften oder Querspannungen besonders unproblematisch, da es keine Schnittstelle im Bereich der Aufnahme gibt, die anderenfalls eine mechanische Schwachstelle sein könnte.

Eine weitere bevorzugte Ausgestaltung der Erfindung zeichnet sich dadurch aus, dass die Aufnahme und bzw. oder das Kupplungsgehäuse aus einem elastischen Kunststoff ist bzw. sind. Grundsätzlich können das Kupplungsgehäuse und bzw. oder die Aufnahme aus einem beliebigen, geeigneten elastischen Material hergestellt sein. So können die Aufnahme und bzw. oder das Kupplungsgehäuse aus einem elastischen Metall hergestellt sein. Kunststoff hat sich jedoch für die Herstellung der Aufnahme beziehungsweise des Kupplungsgehäuses als besonders vorteilhaft erwiesen, da es einfach und präzise zu verarbeiten ist. Außerdem hat Kunststoff ein geringeres Gewicht.

Eine weitere bevorzugte Ausgestaltung der Erfindung zeichnet sich dadurch aus, dass der öffnungsseitige Bereich der Aufnahme geschlitzt ausgestaltet ist. Vorzugsweise sind die Schlitze in Längsrichtung der Aufnahme oder spitzwinkelig dazu ausgerichtet. Außerdem können die Schlitze zur Öffnung hin offen ausgestaltet sein. Mit den Schlitzen lässt sich die Steifigkeit des öffnungsseitigen Bereichs der Aufnahme in Radialrichtung besonders einfach verringern, um ein werkzeugloses Einstecken des Kupplungsstutzens zu vereinfachen. Durch eine Wahl der Breite, Länge und bzw. oder Anzahl der Schlitze kann die entsprechende Steifigkeit besonders einfach vorbestimmt werden.

Eine weitere bevorzugte Ausgestaltung der Erfindung zeichnet sich dadurch aus, dass eine Innenfläche der Aufnahme zu einer Außenfläche des Kontaktbereichs korrespondiert. Dabei kann ein Spiel, beispielsweise von maximal 15%, 10%, 5% oder 3% des Maximaldurchmessers der Innenfläche, zwischen der Innenfläche und der Außenfläche vorgesehen sein. Außerdem kann es vorgesehen sein, dass eine Durchmesserkontur der Aufnahme zu einer Durchmesserkontur des Kontaktbereichs korrespondiert. Grundsätzlich ist es auch möglich, dass die Außenfläche und die Innenfläche derart ausgestaltet sind, dass der öffnungsseitige Bereich der Aufnahme nach dem Einstecken des Kontaktbereichs nicht vollständig in seine ursprüngliche Form zurückkehrt, so dass eine spielfreie Verbindung entsteht. Alle drei Ausgestaltungen gewährleisten aber jeweils einen besonders guten Formschluss, der einen Halt in allen drei Hauptrichtungen und zugleich ein freies Verdrehen um alle drei Hauptrichtungen bietet.

Eine weitere bevorzugte Ausgestaltung der Erfindung zeichnet sich dadurch aus, dass genau ein oder mindestens ein Dichtungsring zwischen der Aufnahme und dem Kontaktbereich angeordnet ist, wobei der Dichtring oder einer der Dichtringe in einer umlaufenden Nut der Aufnahme oder des Kupplungsstutzen gehalten ist. Die Nut ist vorzugsweise als Dichtungsnut ausgestaltet. Wenn im Weiteren von der Nut gesprochen wird, kann damit vorzugsweise auch die Dichtungsnut als Nut verstanden werden. Die Nut dient als Haltemittel für den einen Dichtring, der zum Abdichten des Kupplungsstutzens gegenüber der Aufnahme bestimmt ist. Mit einem Dichtring kann die Abdichtung zwischen dem Kupplungsstutzen und der Aufnahme verbessert werden. Aus dem Stand der Technik sind Dichtringe bekannt. Diese können beispielsweise eine Lippenform aufweisen. Bevorzugt ist die Nut in einer Ebenen quer zu einer Längsachse des Kupplungsgehäuses und bzw. oder mittig zu der Aufnahme angeordnet. Alternativ kann die Nut in einer Ebenen quer zu einer Längsachse des Kupplungsstutzens und bzw. oder mittig zu der Kontaktfläche angeordnet sein. Beide Ausgestaltungen bieten über einen großen Knickwinkel zwischen den Längsachsen des Kupplungsstutzens und des Kupplungsgehäuses eine Dichtigkeit des Kupplungssystems.

Die Aufnahme im öffnungsseitigen Bereich weist eine lösbare Abzugssicherung zum Verhindern eines radialen Aufweitens des öffnungsseitigen Bereichs auf. Ist die Abzugssicherung gelöst, findet jedoch kein Verhindern des radialen Aufweitens statt. Dazu kann die Abzugssicherung von dem öffnungsseitigen Bereich der Aufnahme getrennt oder von dieser gelockert werden. Zum Einstecken des Kontaktbereichs Kupplungsstutzens in die Aufnahme des Kupplungsstutzens ist die Abzugssicherung vorzugsweise gelöst, so dass der öffnungsseitige Bereich der Aufnahme ungehindert und elastisch radial nach außen geweitet werden kann. Ist der Kontaktbereich des Kupplungsstutzens bestimmungsgemäß in die Aufnahme eingesteckt, ist der öffnungsseitige Bereich teilweise oder vollständig zurückgekehrt. Sodann lässt sich die Abzugssicherung wieder befestigen. Durch die Abzugssicherung vergrößert sich die Gesamtsteifigkeit im öffnungsseitigen Bereich, so dass ein Aufweiten des öffnungsseitigen Bereichs, beispielsweise durch eine längsaxiale Zugkraft zwischen dem Kupplungsstutzen und dem Kupplungsgehäuse, verhindert wird. Die Aufnahme bietet deshalb auch in längsaxialer Richtung einen festen Halt. Die Abzugssicherung kann insbesondere dann vorgesehen sein, wenn die Aufnahme geschlitzt ausgestaltet ist.

Eine weitere bevorzugte Ausgestaltung der Erfindung zeichnet sich dadurch aus, dass die Abzugssicherung von außen auf den öffnungsseitigen Bereich aufsteckbar ist. Besonders bevorzugt ist die Abzugssicherung eine Federklammer. Die Abzugssicherung kann außerdem kraft- und bzw. oder formschlüssig über den öffnungsseitigen Bereich steckbar ausgestaltet ist. Dazu kann die Abzugssicherung beispielsweise nach Art eines U-förmigen Rings oder eines Rings mit einem offenen Segment ausgestaltet sein. Außerdem können außen an der Aufnahme Halteelemente, insbesondere Haken, vorgesehen sein, um eine Positionierung der Abzugssicherung zu gewährleisten.

Eine weitere bevorzugte Ausgestaltung der Erfindung zeichnet sich dadurch aus, dass die Abzugssicherung ringförmig ist. Die Ringform gewährleistet, dass die Aufnahme umlaufend oder zu einem großen Winkelbereich an einer ungewollten Aufweitung gehindert wird.

Die Abzugssicherung ist ein Ring mit radial nach innen ragenden Spannkurven und die Aufnahme weist im öffnungsseitigen Bereich radial nach außen ragenden Haltenuten auf, wobei die Spannkurven durch ein Verdrehen der Abzugssicherung derart mit den Haltenuten in Kontakt bringbar sind, dass ein radiales Aufweiten des öffnungsseitigen Bereichs verhindert wird. Durch das Verdrehen kann der Ring in den Haltenuten einrasten. Die Rasterung ist so ausgelegt, dass sie mit einem festgelegten Kraftaufwand lösbar ist. Bei entsprechender Auslegung der Spannkurve und bzw. oder der Haltenuten ist ein versehentliches lösen nicht möglich. Wird der Ring zurückgedreht, besteht kein Kontakt zwischen den Haltenuten und dem Ring, so dass ein Aufweiten, beispielsweise zum Einstecken des Kupplungsstutzens in das Kupplungsgehäuse, möglich ist. Die Abzugssicherung bietet also eine erste Verdrehstellung, in der ein Aufweiten des öffnungsseitigen Bereichs der Aufnahme möglich ist, und eine zweite Verdrehstellung, in der ein Aufweiten des öffnungsseitigen Bereichs der Aufnahme verhindert wird. Die Ausgestaltung der Abzugssicherung ist deshalb besonders einfach in der Handhabung, insbesondere bei einer Montage oder Demontage des Kupplungssystems.

Die Erfindung wird im Folgenden anhand bevorzugter Ausführungsformen unter Bezugnahme auf die beigefügten Figuren erläutert. Dabei zeigt:
Fig. 1 eine schematische Schnittdarstellung des erfindungsgemäßen Kupplungssystems in perspektivischer Ansicht,
Fig. 2 eine schematische Seitenansicht des erfindungsgemäßen Kupplungssystems,
Fig. 3 eine schematischen Schnittdarstellung entlang einer Längsachse des erfindungsgemäßen Kupplungssystems,
Fig. 4 eine schematische Seitenansicht des erfindungsgemäßen Kupplungssystems,
Fig. 5 eine schematische Querschnittsdarstellung der Aufnahme mit Dichtungsnut und Dichtring,
Fig. 6 eine schematische Querschnittsdarstellung des Kontaktbereichs mit Nut und Dichtring,
Fig. 7 eine schematische Seitenansicht der Aufnahme mit Abzugssicherung, welche nicht durch die Ansprüchen abgedeckt ist,
Fig. 8 eine schematische Stirnansicht der Aufnahme mit Abzugssicherung, welche nicht durch die Ansprüchen abgedeckt ist,
Fig. 9 eine schematische Stirnansicht der Aufnahme mit einer Abzugssicherung in einer ersten Verdrehstellung, und
Fig. 10 eine schematische Stirnansicht der Aufnahme mit der Abzugssicherung in einer zweiten Verdrehstellung.

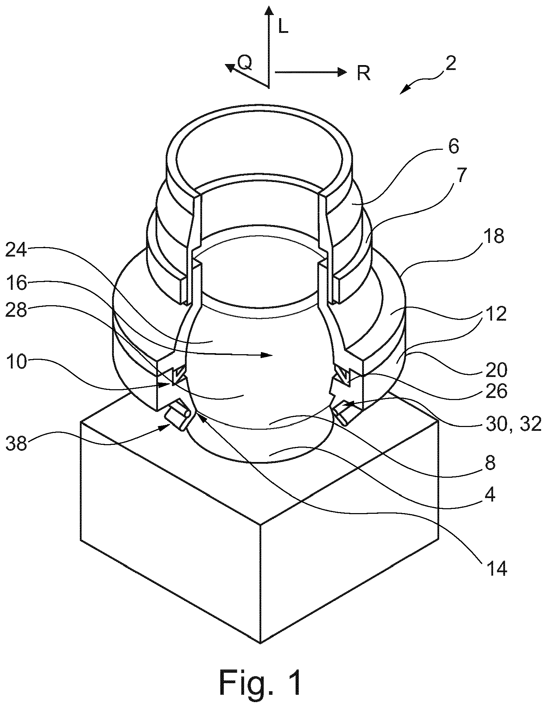

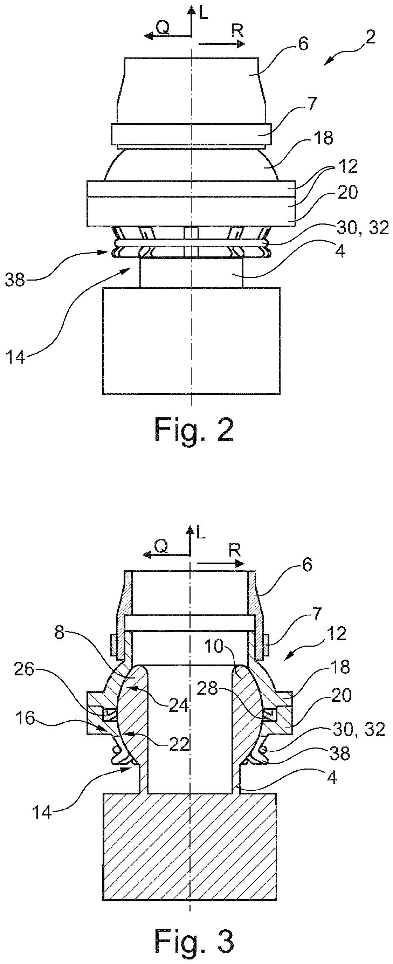

In Figur 1 wird das erfindungsgemäße Kupplungssystem 2 schematisch in einer perspektivischen Schnittansicht wiedergegeben. Die Figuren 2 und 3 zeigen das erfindungsgemäße Kupplungssystem 2 in einer schematischen Seitenansicht bzw. in einer korrespondierenden Schnittdarstellung entlang einer Längsachse L. Das Kupplungssystem 2 dient zum Verbinden einer ersten Fluidleitung 4 mit einer zweiten Fluidleitung 6. Besonders bevorzugt wird das erfindungsgemäße Kupplungssystem 2 zum Verbinden von zwei Luftleitungen eines Luftansaugleitungssystems eines Verbrennungsmotors verwendet. Die zweite Fluidleitung 6, vorzugsweise als Schlauch ausgestaltet, ist dazu mittels eines Klemmmittels 7 auf dem Kupplungsgehäuse 12 festgeklemmt. Das rohrförmige Kupplungsgehäuse 12 und die zweite Fluidleitung 6 bilden somit einen gemeinsamen Fluidkanal.

Die erste Fluidleitung 4, hier als metallisches Rohr ausgestaltet, ist mit dem Kupplungsstutzen 8 verbunden. Wie aus den Figuren 1 bis 3 ersichtlich ist, sind der Kupplungsstutzen 8 und die erste Fluidleitung 4 einstückig ausgestaltet. Dies kann dann besonders sinnvoll sein, wenn die erste Fluidleistung 4 besonders kurz ist, oder wenn es keinen beziehungsweise kaum Raum zur Montage des Kupplungsstutzens 8 gibt. Durch die Verbindung des Kupplungsstutzens 8 mit der ersten Fluidleitung 4 bilden diese einen gemeinsamen Fluidkanal.

Um nun den Kupplungsstutzen 8 mit dem Kupplungsgehäuse 12 in der Weise zu verbinden, dass auch der Kupplungsstutzen 8 und das Kupplungsgehäuse 12 einen gemeinsamen Fluidkanal bilden, wird der Kupplungsstutzen 8 in eine Aufnahme 16 des Kupplungsgehäuses 12 eingesteckt. Dabei weitet der Kupplungsstutzen 8 mit seinem konvexen, kugelringförmigen Kontaktbereich 10 den öffnungsseitigen Bereich 20 der Aufnahme 16 zunächst etwas auf, bevor der öffnungsseitige Bereich 20 wieder in seine ursprüngliche Form zurückkehrt und dabei den Kontaktbereich 10 des Kupplungsstutzens 8 hinterfasst. Um dies zu ermöglichen, ist der öffnungsseitige Bereich 20 der Aufnahme 16 in Radialrichtung R, also in einer Richtung quer zu einer Längsrichtung L der Aufnahme 16, elastisch ausgestaltet.

Mit dem Einstecken des Kupplungsstutzens 8 in die Aufnahme 16 bilden der Kupplungsstutzen 8 und das Kupplungsgehäuse 12 eine Kugelgelenkverbindung. Denn der kugelringförmige Kontaktbereich 10 und die kugelringförmige Aufnahme 16 greifen derart ineinander, dass ein Verdrehen des Kupplungsstutzens 8 oder des Kupplungsgehäuses 12 um eine jeweilige Achse Längsrichtung L ist weiterhin möglich. Auch ein Verdrehen um eine Achse quer zu der Längsrichtung L, also einer Achse in Querrichtung Q, ist weiterhin in einem beschränkten Winkelbereich möglich.

Indem die Aufnahme 16 den Kontaktbereich 10 umfasst, wird der Kupplungsstutzen 8 von dem Kupplungsgehäuse 12 in Längsrichtung L als auch in Querrichtung Q gehalten. Um diesen Zusammenhalt auch bei höheren Zugkräften zwischen dem Kupplungsgehäuse 12 und dem Kupplungsstutzen 8 zu gewährleisten, ist eine aufsteckbare Abrutschsicherung 30 vorgesehen. Die Abrutschsicherung 30 wird aufgesteckt, nachdem der Kupplungsstutzen 8 in das Kupplungsgehäuse 12 eingesteckt ist. Die Abrutschsicherung 30 ist hierbei eine ringförmige Klammer 32, die außen über den öffnungsseitigen Bereich 20 der Aufnahme 16 geschoben ist. Durch die Abrutschsicherung 30 vergrößert sich die Steifigkeit der Aufnahme im öffnungsseitigen Bereich 20 und verhindert damit ein ungewolltes Aufweiten des öffnungsseiteigen Bereichs 20. Dadurch verhindert die Abrutschsicherung 30 weiter, dass der Kupplungsstutzen 8 ungewollt aus dem Kupplungsgehäuse 12 herausziehbar ist. Um ein ungewolltes Wegrutschen der Abrutschsicherung 30 in Richtung der Öffnung 14 zu verhindern, ist an dem öffnungsseitigen Ende der Aufnahme 16 eine Lippe 38 vorgesehen, die zur sicheren Positionierung der Abrutschsicherung 30 dient.

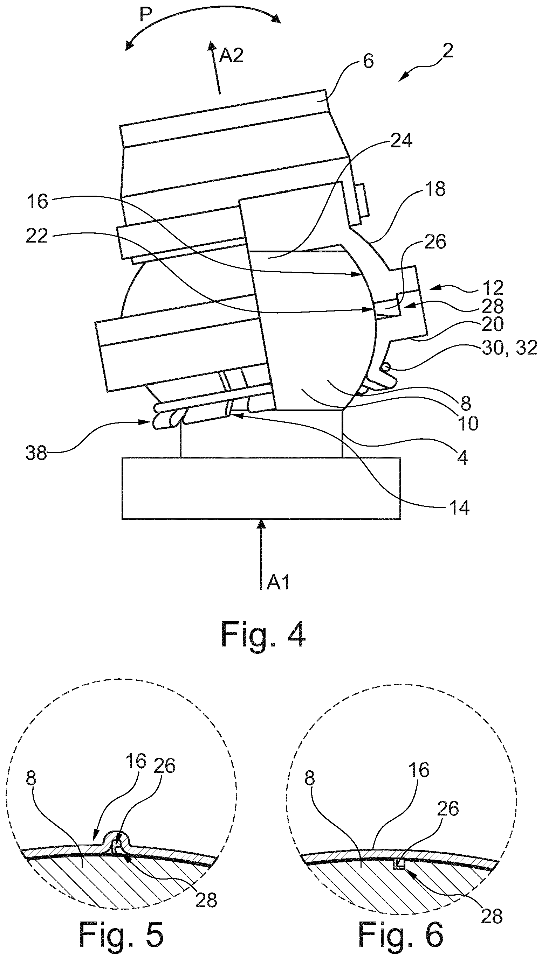

In Figur 4 ist das Kupplungssystem 2 in der Weise dargestellt, dass eine Längsachse A1 des Kupplungsstutzens 8 spitzwinkelig zu einer Längsachse A2 des Kupplungsgehäuses 12 ausgerichtet ist. Aufgrund der kugelförmigen Ausgestaltung der Aufnahme 16 und des Kontaktbereichs 10 fassen diese aber weiterhin korrespondierend ineinander und gewährleisten einen sicheren Halt zueinander. Dennoch kann das Kupplungssystem 2, beziehungsweise der Kupplungsstutzen 8 und das Kupplungsgehäuse 12 relativ zueinander eine Pendelbewegung P ausführen. Der gemeinsame Fluidkanal bleibt erhalten. Ein derartiger Kupplungsstutzen 8 wird oftmals für Verbrennungsmotoren verwenden. So kann der Kupplungsstutzen 8 motorseitig oder Ladeluftkühlerseitig angebracht sein.

Außerdem ist aus den Figuren 1 bis 5 eine Dichtungsnut 28 ersichtlich, die ein Dichtring 26 hält. Die Dichtungsnut 28 ist innenseitig von der Aufnahme 16 gebildet. Die Dichtungsnut 28 erstreckt sich dazu umlaufend in einer Ebenen, die quer zu einer Längsachse A2 der Aufnahme 16 ist. Des Weiteren ist die Dichtungsnut 28 mittig zu der Aufnahme 16 angeordnet. Durch die zuvor genannte Ausgestaltung beziehungsweise Ausbildung der Dichtungsnut 28 wird besonders effektiv sichergestellt, dass der von der Dichtungsnut 28 gehaltene Dichtring 26 stets in Kontakt mit dem Kontaktbereich 10 des Kupplungsstutzens 8 ist. Durch den Dichtring 26 werden der Kupplungsstutzen 8 und das Kupplungsgehäuse 12 unabhängig von einem relativen Verdrehwinkel zueinander abgedichtet. Eine Leckage von Fluid wird somit verhindert.

In Figur 6 wird eine alternative Ausbildung der Dichtungsnut 28 gezeigt. Anstatt von der Aufnahme 16 wird die Dichtungsnut 28 von dem Kontaktbereich 10 des Kupplungsstutzens 8 gebildet. Die Dichtungsnut 28 erstreckt sich dazu umlaufend in einer Ebenen, die quer zu einer Längsachse A1 des Kontaktbereiches 10 ist. Des Weiteren ist die Dichtungsnut 28 mittig zu dem Kontaktbereich 10 angeordnet. Mit dieser Ausgestaltung werden Vorteile erreicht, die analog zu der vorherigen, alternativen Ausgestaltung erläutert worden sind.

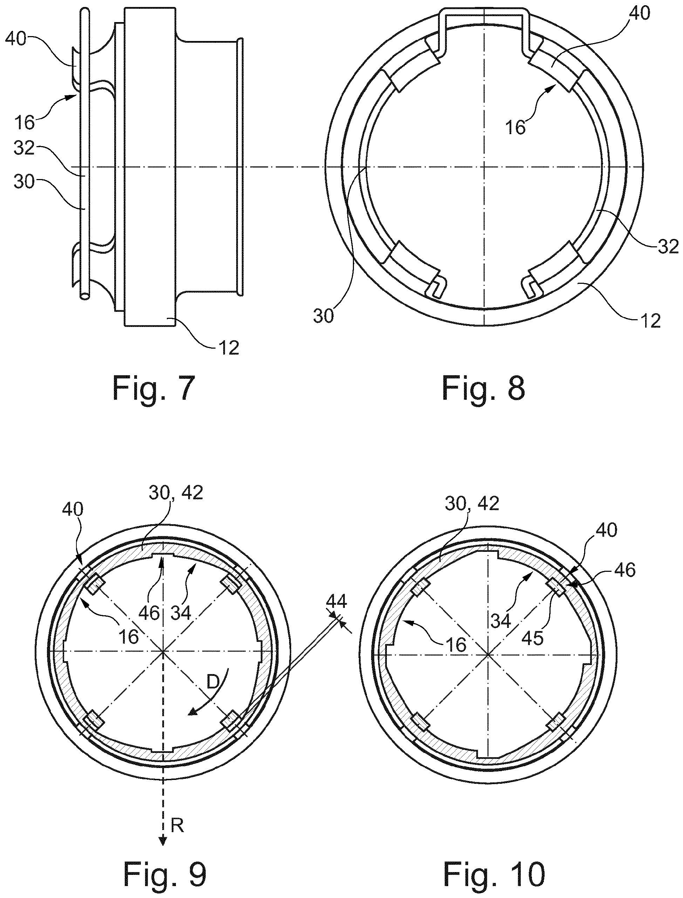

Die Figuren 7 und 8 zeigen eine Ausgestaltung der Abrutschsicherung 30 , welche nicht durch die Ansprüchen abgedeckt ist, als U-förmige Federklammer 32. Diese wird nach dem Einstecken des Kontaktbereichs 10 des Kupplungsstutzens 8 in die Aufnahme 16 des Kupplungsgehäuses 12 derart außenseitig über die Aufnahme 16 geschoben, dass die Federklammer 32 auf Auflagen 36 der Aufnahme 16 klemmt. Die Federklammer 32 wird dabei durch Auflagen 36 positioniert und bzw. oder in Längsrichtung A2 gehalten.

Die Figuren 9 und 10 zeigen eine bevorzugte Ausgestaltung der Abrutschsicherung 30 als ein Ring 42 mit radial nach innen ragenden Zähnen 34, die besonders bevorzugt eine Spannkurve bilden. In einer wie in Figur 9 gezeigten ersten Verdrehstellung des Rings 42 besteht zwischen den Haltenuten 45 und dem Ring 42 kein direkter Kontakt. Zwischen einer Auflageseite einer jeweiligen Haltenut 45 und einer Innenseite des Rings 42 ist also ein Spalt 44. Die Aufnahme 16 kann sich also elastisch in Radialrichtung R nach außen verformen, um das Einstecken des Kupplungsstutzens 8 in das Kupplungsgehäuse 12 zu ermöglichen. Danach wird der Ring 42 in Drehrichtung D verdreht und somit in eine zweite Verdrehstellung gebracht, wie sie in Figur 10 dargestellt ist. In der zweiten Verdrehstellung hat der Ring 42 mit den Haltenuten 45 einen direkten Kontakt und verhindert ein ungewolltes Aufweiten der Aufnahme 16. Ein Ende einer jeweiligen Haltenut 45 bildet eine Rastnase 46, die in der zweiten Verdrehstellung mit dem Ring 42 verrastet, so dass ein ungewolltes Lösen des Rings 42 verhindert wird. Der Kupplungsstutzen 8 ist also sicher in der Aufnahme 16 gehalten.

### Bezugszeichenliste

### (Teil der Beschreibung)

- A1, A2: Längsachsen
- D: Drehrichtung
- L: Längsrichtung
- Q: Querrichtung
- R: Radialrichtung

- 2: Kupplungssystem
- 4: erste Fluidleitung
- 6: zweite Fluidleitung
- 7: Klemmmittel
- 8: Kupplungsstutzen
- 10: Kontaktbereich
- 12: Kupplungsgehäuse
- 14: Öffnung
- 16: Aufnahme
- 18: fluidleitungsseitiger Bereich
- 20: öffnungsseitiger Bereich
- 22: Innenfläche der Aufnahme
- 24: Außenfläche des Kontaktbereichs
- 26: Dichtungsring
- 28: Nut
- 30: Abzugssicherung
- 32: Federklammer
- 34: Zähne
- 36: Auflage
- 38: Lippe
- 40: Führungselement
- 42: Ring
- 44: Spalt
- 45: Haltenut
- 46: Rastnase

## Patentansprüche

1. Kupplungssystem (2) zum Verbinden einer ersten Fluidleitung (4) mit einer zweiten Fluidleitung (6), aufweisend
einen rohrförmigen Kupplungsstutzen (8) zum Ankoppeln an die erste Fluidleitung (4), wobei der Kupplungsstutzen (8) außenseitig einen konvexen, kugelringförmigen Kontaktbereich (10) aufweist, und
ein rohrförmiges Kupplungsgehäuse (12) zum Ankoppeln an die zweite Fluidleitung (6), wobei das Kupplungsgehäuse (12) eine Öffnung (14) und eine anschließende Aufnahme (16) aufweist, und wobei die Aufnahme (16) innenseitig konkav, kugelringförmig ausgestaltet ist,
wobei die kugelringförmige Aufnahme (16) einen fluidleitungsseitigen Bereich (18) und einen öffnungsseitigen Bereich (20) aufweist, und
wobei der öffnungsseitige Bereich (20) der Aufnahme (16) in Radialrichtung derart elastisch verformbar ausgestaltet ist, dass der Kontaktbereich (10) des Kupplungsstutzens (8) durch die Öffnung (14) in die Aufnahme (16) einsteckbar ist, so dass der öffnungsseitige Bereich (20) der Aufnahme (16) den Kontaktbereich (10) des Kupplungsstutzens (8) hinterfasst, und
wobei die Aufnahme (16) im öffnungsseitigen Bereich (20) eine lösbare Abzugssicherung (30) zum Verhindern eines radialen Aufweitens des öffnungsseitigen Bereichs (20) aufweist,
**dadurch gekennzeichnet, dass**
die Abzugssicherung (30) ein Ring mit radial nach innen ragenden Spannkurven (34) ist und dass die Aufnahme (16) im öffnungsseitigen Bereich (20) radial nach außen ragenden Haltenuten (45) aufweist, wobei die Spannkurven (34) durch ein Verdrehen der Abzugssicherung (30) derart mit den Haltenuten (45) in Kontakt bringbar sind, dass ein radiales Aufweiten des öffnungsseitigen Bereichs (20) verhindert wird.

2. Kupplungssystem (2) nach Anspruch 1, **dadurch gekennzeichnet, dass** die Aufnahme (16) und bzw. oder das Kupplungsgehäuse (12) einstückig ist.

3. Kupplungssystem (2) nach einem der vorhergehenden Ansprüche, **dadurch gekennzeichnet, dass** die Aufnahme (16) und bzw. oder das Kupplungsgehäuse (12) aus einem elastischen Kunststoff ist.

4. Kupplungssystem (2) nach einem der vorhergehenden Ansprüche, **dadurch gekennzeichnet, dass** der öffnungsseitige Bereich (20) der Aufnahme (16) geschlitzt ausgestaltet ist.

5. Kupplungssystem (2) nach dem vorhergehenden Anspruch, **dadurch gekennzeichnet, dass** eine Innenfläche (22) der Aufnahme (16) zu einer Außenfläche (24) des Kontaktbereichs (10) korrespondiert.

6. Kupplungssystem (2) nach einem der vorhergehenden Ansprüche, **dadurch gekennzeichnet, dass** ein Dichtungsring (26) zwischen der Aufnahme (16) und dem Kontaktbereich (10) angeordnet ist, wobei der Dichtring (26) in einer umlaufenden Nut (28), vorzugsweise Dichtungsnut (28), der Aufnahme (16) oder des Kupplungsstutzen (8) gehalten ist.

7. Kupplungssystem (2) nach dem vorhergehenden Anspruch, **dadurch gekennzeichnet, dass** die Abzugssicherung (30) ringförmig ist.

8. Kupplungssystem (2) nach einem der vorhergehenden Ansprüche, **dadurch gekennzeichnet, dass** die Abzugssicherung (30) von außen auf den öffnungsseitigen Bereich (20) aufsteckbar ist.

## Claims

1. Coupling system (2) for connecting a first fluid line (4) to a second fluid line (6), having
a tubular coupling connecting piece (8) for coupling to the first fluid line (4), wherein the coupling connecting piece (8) has a convex, ball ring-shaped contact region (10) on the outer side, and
a tubular coupling housing (12) for coupling to the second fluid line (6), wherein the coupling housing (12) has an opening (14) and an adjoining receptacle (16), and wherein the receptacle (16) is concave on the inner side and of ball ring-shaped form,
wherein the ball ring-shaped receptacle (16) has a fluid line-side region (18) and an opening-side region (20), and
wherein the opening-side region (20) of the receptacle (16) is formed to be elastically deformable in the radial direction such that the contact region (10) of the coupling connecting piece (8) is able to be inserted into the receptacle (16) through the opening (14) such that the opening-side region (20) of the receptacle (16) engages behind the contact region (10) of the coupling connecting piece (8), and
wherein the receptacle (16) has, in the opening-side region (20), a releasable pull-out prevention means (30) for preventing radial widening of the opening-side region (20),
**characterized in that**
the pull-out prevention means (30) is a ring with radially inwardly projecting clamping curves (34), and **in that** the receptacle (16) has, in the opening-side region (20), radially outwardly projecting retaining grooves (45), wherein, by rotation of the pull-out prevention means (30), the clamping curves (34) are able to be brought into contact with the retaining grooves (45) such that radial widening of the opening-side region (20) is prevented.

2. Coupling system (2) according to Claim 1, **characterized in that** the receptacle (16) and/or the coupling housing (12) is one piece.

3. Coupling system (2) according to one of the preceding claims, **characterized in that** the receptacle (16) and/or the coupling housing (12) is composed of an elastic plastic.

4. Coupling system (2) according to one of the preceding claims, **characterized in that** the opening-side region (20) of the receptacle (16) is of slotted form.

5. Coupling system (2) according to the preceding claim, **characterized in that** an inner surface (22) of the receptacle (16) corresponds to an outer surface (24) of the contact region (10).

6. Coupling system (2) according to one of the preceding claims, **characterized in that** a seal ring (26) is arranged between the receptacle (16) and the contact region (10), wherein the seal ring (26) is retained in an encircling groove (28), preferably seal groove (28), of the receptacle (16) or of the coupling connecting piece (8).

7. Coupling system (2) according to the preceding claim, **characterized in that** the pull-out prevention means (30) is ring-shaped.

8. Coupling system (2) according to one of the preceding claims, **characterized in that** the pull-out prevention means (30) is able to be mounted onto the opening-side region (20) from the outside.

## Revendications

1. Système de raccordement (2) destiné à relier une première conduite de fluide (4) à une deuxième conduite de fluide (6), comprenant
une tubulure de raccordement (8) tubulaire destinée à être raccordée à la première conduite de fluide (4), la tubulure de raccordement (8) comprenant, du côté extérieur, une zone de contact (10) convexe en forme d'anneau sphérique et
un boîtier de raccordement (12) tubulaire destiné à être raccordé à la deuxième conduite de fluide (6), le boîtier de raccordement (12) comprenant une ouverture (14) et un logement (16) adjacent, et le logement (16) étant configuré de manière concave et en forme d'anneau sphérique du côté intérieur,
le logement (16) en forme d'anneau sphérique comprenant une zone (18) côté conduite de fluide et une zone (20) côté ouverture et
la zone (20), côté ouverture, du logement (16) étant configurée de manière déformable élastiquement dans la direction radiale de telle sorte que la zone de contact (10) de la tubulure de raccordement (8) puisse être insérée à travers l'ouverture (14) dans le logement (16), de telle sorte que la zone (20), côté ouverture, du logement (16) vienne en prise par l'arrière avec la zone de contact (10) de la tubulure de raccordement (8) et
le logement (16) comprenant, dans la zone (20) côté ouverture, une sécurité anti-retrait (30) amovible servant à empêcher un élargissement radial de la zone (20) côté ouverture,
**caractérisé en ce que**
la sécurité anti-retrait (30) est une bague dotée de courbes de serrage (34) faisant saillie radialement vers l'intérieur, et **en ce que** le logement (16) comprend, dans la zone (20) côté ouverture, des rainures de retenue (45) faisant saillie radialement vers l'extérieur, les courbes de serrage (34) pouvant être amenées en contact avec les rainures de retenue (45) par une rotation de la sécurité anti-retrait (30), de telle sorte qu'un élargissement radial de la zone (20) côté ouverture soit empêché.

2. Système de raccordement (2) selon la revendication 1, **caractérisé en ce que** le logement (16) et respectivement ou le boîtier de raccordement (12) est/sont réalisé(s) d'une seule pièce.

3. Système de raccordement (2) selon l'une quelconque des revendications précédentes, **caractérisé en ce que** le logement (16) et respectivement ou le boîtier de raccordement (12) est/sont constitué(s) d'une matière synthétique élastique.

4. Système de raccordement (2) selon l'une quelconque des revendications précédentes, **caractérisé en ce que** la zone (20), côté ouverture, du logement (16) est configurée de manière fendue.

5. Système de raccordement (2) selon la revendication précédente, **caractérisé en ce qu'**une surface intérieure (22) du logement (16) correspond à une surface extérieure (24) de la zone de contact (10).

6. Système de raccordement (2) selon l'une quelconque des revendications précédentes, **caractérisé en ce qu'**une bague d'étanchéité (26) est disposée entre le logement (16) et la zone de contact (10), la bague d'étanchéité (26) étant retenue dans une rainure périphérique (28), de préférence une rainure d'étanchéité (28), du logement (16) ou de la tubulure de raccordement (8).

7. Système de raccordement (2) selon la revendication précédente, **caractérisé en ce que** la sécurité anti-retrait (30) est annulaire.

8. Système de raccordement (2) selon l'une quelconque des revendications précédentes, **caractérisé en ce que** la sécurité anti-retrait (30) peut être enfichée depuis l'extérieur sur la zone (20) côté ouverture.
